(19) Europäisches Patentamt
European Patent Office
Office européen des brevets

(11) **EP 1 376 202 B1**

(12) **FASCICULE DE BREVET EUROPEEN**

(45) Date de publication et mention
de la délivrance du brevet:
**13.08.2014   Bulletin 2014/33**

(51) Int Cl.:
***G02C 7/06*** *(2006.01)*   ***G02C 7/02*** *(2006.01)*

(21) Numéro de dépôt: **02291502.9**

(22) Date de dépôt: **17.06.2002**

(54) **Modélisation d'une surface d'une lentille ophtalmique**

Oberflächenmodellierung einer ophtalmologischen Linse

Surface model of an ophtalmic lens

(84) Etats contractants désignés:
**AT BE CH CY DE DK ES FI FR GB GR IE IT LI LU MC NL PT SE TR**

(43) Date de publication de la demande:
**02.01.2004   Bulletin 2004/01**

(73) Titulaire: **ESSILOR INTERNATIONAL (Compagnie Générale d'Optique)**
**F-94220 Charenton-le-Pont (FR)**

(72) Inventeurs:
• **Le Saux, Gilles**
**75010 Paris (FR)**

• **Allione, Pascal**
**92400 Courbevoie (FR)**

(74) Mandataire: **Hirsch & Associés**
**58, avenue Marceau**
**75008 Paris (FR)**

(56) Documents cités:
**US-A- 5 137 343      US-A- 5 488 442**
**US-A- 5 636 338      US-A- 5 861 935**
**US-B1- 6 213 603     US-B1- 6 318 859**
**US-B1- 6 382 789**

## Description

La présente invention concerne les lentilles ophtalmiques, et plus précisément la modélisation d'une surface complexe d'une lentille, par exemple une surface multifocale progressive. Elle s'applique notamment au calcul d'une surface de prescription, sphérique ou torique, d'une lentille ophtalmique.

Les lentilles ophtalmiques multifocales sont bien connues; on peut parmi ces lentilles multifocales distinguer des lentilles appelées lentilles progressives, et des lentilles plus spécifiquement dédiées à la vision de près. Les lentilles ophtalmiques multifocales progressives sont utilisées pour corriger la presbytie et permettent au porteur des lunettes d'observer des objets dans une large gamme de distances, sans avoir à retirer ses lunettes. De telles lentilles comportent typiquement une zone de vision de loin, située dans le haut de la lentille, une zone de vision de près, située dans le bas de la lentille, une zone intermédiaire reliant la zone de vision de près et la zone de vision de loin, ainsi qu'une méridienne principale de progression traversant ces trois zones. Il est prévu un point de référence pour la vision de loin dans la zone de vision de loin et un point de référence pour la vision de près dans la zone de vision de près. Ces lentilles sont par exemple décrites dans FR-A-2 699 294, US-A-5 270 745, US-A-5 272 495, FR-A-2 683 642, FR-A-2 699 294 ou FR-A-2 704 327.

Il existe aussi des lentilles dédiées plus spécifiquement à la vision de près; ces lentilles ne présentent pas une zone de vision de loin avec un point de référence défini comme dans les lentilles progressives classiques. Ces lentilles sont prescrites en fonction de la puissance nécessaire au porteur en vision de près, indépendamment de la puissance en vision de loin. Ce type de lentilles est décrit dans un article de l'Opticien Lunetier d'avril 1988, et est commercialisé par la demanderesse sous la marque Essilor Interview. Cette lentille est aussi décrite dans FR-A-2 588 973.

Habituellement, les lentilles multifocales, qu'elles soient progressives ou dédiées à la vision de près, comportent une face multifocale asphérique, par exemple la face opposée au porteur des lunettes, et une face sphérique ou torique, dite face de prescription. Cette face sphérique ou torique permet d'adapter la lentille à l'amétropie de l'utilisateur, prescrite par l'ophtalmologiste. Une lentille multifocale est donc généralement un produit semi-fini, qui doit être adapté au porteur par usinage de la face de prescription. Une telle lentille multifocale peut être définie en fournissant des centaines de paramètres définissant l'altitude d'un grand nombre de points de la surface. Un procédé d'adaptation de la face sphérique ou torique est décrit en détail dans EP-A-0 990 939; il est proposé d'utiliser pour définir la face arrière un programme de tracé de rayons et de procéder par optimisation. Dans ce cas, la face avant est modélisée par des polynômes de Zemike. EP-A-0 990 939 mentionne aussi qu'une surface asphérique est généralement définie par l'altitude de tous les points de la surface, ou alors par les valeurs de sphère moyenne et de cylindre en tous les points de la surface. La sphère et le cylindre en un point étant classiquement définis comme la demi-somme et la différence des courbures maximale et minimale de la surface en ce point, multipliées par un facteur (n-1), avec n l'indice de réfraction du matériau de la lentille.

US-A-5 444 503 propose de définir la surface de prescription de la lentille à partir des aberrations sur toute la surface de la lentille, en faisant varier de façon appropriée une surface continue paramétrée, par exemple une surface définie par des splines, à l'aide d'algorithmes mathématiques d'optimisation connus.

US-A-6 089 713 (EP-A-0 857 993) décrit une lentille présentant une face avant sphérique ou asphérique présentant une symétrie de rotation. La face arrière est adaptée au porteur, pour impartir à la lentille la sphère, l'astigmatisme et le prisme prescrit, ainsi que leur répartition sur la lentille. La surface multifocale est définie pour chaque utilisateur.

US-A-2 878 721 propose une lentille multifocale, avec une face de prescription sur l'avant de la lentille. La face de prescription est utilisée pour adapter la lentille à l'utilisateur, sans que la nature de cette adaptation ne soit précisée.

Pour les verres unifocaux, la puissance est habituellement calculée par application de la formule de Gullstrand, au centre optique de la lentille. Il suffit donc de connaître l'indice n du matériau, les rayons de courbure de chaque face de la lentille et leur orientation, et l'épaisseur e au centre optique pour connaître les puissances de la lentille. Par exemple, si la face avant et la face arrière de la lentille sont localement sphériques au centre optique, et si $C_1$ est la courbure de la face avant et $C_2$ celle de la face arrière au centre optique, la formule de Gullstrand s'écrit, comme cela est connu de l'homme du métier

$$P = (n - 1)(C1/(1-e(n-1)C1/n) - C2)$$

L'approximation n'est en fait valable que si le point considéré pour le calcul présente localement la forme d'une sphère ou d'un tore - comme c'est le cas pour les verres unifocaux, que si le prisme local de la lentille au point considéré est petit et que si le rayon pour lequel on calcule la puissance de la lentille forme avec elle un angle d'incidence nul.

On appelle dans la suite "lentille complexe pour le point considéré" ou plus simplement « lentille complexe », toute lentille ophtalmique pour laquelle on ne peut pas calculer la puissance en ce point par simple application de la formule de Gullstrand : les lentilles complexes comprennent donc notamment :

- les lentilles multifocales progressives;
- les lentilles unifocales asphérisées,

- les lentilles sphériques prismées,

ou plus généralement toute lentille considérée en dehors de son centre optique.

On appelle dans la suite "surface complexe" d'une "lentille complexe" toute surface qui n'est globalement ni sphérique ni torique.

Quel que soit le procédé utilisé pour réaliser la face de prescription d'une lentille complexe, il est fait appel à des caractéristiques de la surface complexe de la lentille. Il est donc nécessaire de connaître des caractéristiques de la surface complexe et de manipuler ces caractéristiques, par exemple pour les fournir à une machine de traitement.

Un objectif de l'invention, dans certains modes de réalisation, est de modéliser la surface complexe d'une lentille, précisément et simplement en un point ou autour d'un point, afin de pouvoir calculer des puissances en ce point, dans différentes configurations, sans qu'il ne soit nécessaire de connaître de façon exhaustive la géométrie de la surface complexe de la lentille.

L'invention propose donc une modélisation d'une surface complexe de lentille ophtalmique, comprenant :

- la fourniture de :

  - un point de référence prisme et un point de prescription ;
  - la normale à la surface complexe au point de référence prisme et
  - des caractéristiques locales de la surface complexe au point de prescription ou autour du point de prescription, lesdites caractéristiques locales comprenant la normale et les courbures principales avec leurs orientations en ce point dans un repère donné ; et

- la modélisation de la surface complexe de la lentille par lesdites caractéristiques locales.

Dans un mode de réalisation, les caractéristiques locales autour du point de prescription comprennent des caractéristiques locales dans une pastille centrée sur le point de prescription et de diamètre supérieur ou égal à 2 mm.

On peut aussi prévoir que les caractéristiques locales autour du point de prescription comprennent des caractéristiques locales dans une pastille centrée sur le point de prescription et de diamètre inférieur ou égal à 12 mm. Alternativement, on peut prévoir que les caractéristiques locales autour du point de prescription comprennent des caractéristiques locales dans une pastille centrée sur le point de prescription et ne recouvrant pas le point de référence prisme.

Dans tous les cas, les caractéristiques locales au point de prescription peuvent comprendre la normale et les courbures principales avec leurs orientations en ce point dans un repère donné.

L'invention propose aussi une modélisation d'une lentille présentant une première surface et une deuxième surface sphérique ou torique, comprenant

- une telle modélisation de la première surface de la lentille ;
- l'épaisseur du composant optique mesurée suivant l'axe défini par ladite normale ;
- le plan tangent à la deuxième surface de la lentille sur l'axe ;
- les courbures principales et leurs orientations de la deuxième surface.

L'invention propose encore un procédé de calcul de la surface de prescription d'une lentille semi-finie présentant une surface, comprenant :

- la fourniture d'une prescription comprenant au moins une puissance et un prisme ;
- la fourniture d'une telle modélisation de la surface ;
- le calcul d'une surface de prescription sphérique ou torique en utilisant un tracé de rayon passant par le point de prescription ou autour du point de prescription.

Dans ce cas, l'étape de calcul peut comprendre :

- le choix d'une épaisseur de lentille ;
- la fourniture d'une surface de prescription de départ présentant sur l'axe défini par la normale, le prisme prescrit ;
- la variation des courbures et leurs orientations de la surface de prescription de départ, à prisme constant, pour que les puissances calculées par le tracé de rayon s'approchent des puissances prescrites.

D'autres caractéristiques et avantages de l'invention apparaîtront à la lecture de la description détaillée qui suit des modes de réalisation de l'invention, donnés à titre d'exemple uniquement et en références aux dessins qui montrent :

- figure 1, une représentation schématique de la surface d'une lentille ;
- figure 2, une représentation schématique en coupe d'une lentille, suivant la ligne AA de la figure 1 ;
- figures 3 à 7, diverses étapes d'un procédé de calcul de la surface de prescription en configuration porteur d'une lentille à l'aide d'une modélisation selon l'invention ;
- figures 8 et 9, des représentations schématiques d'une lentille et de l'embout d'un frontofocomètre, pour diverses configurations de la mesure de puissance.

L'invention propose une modélisation d'une surface complexe ou d'une lentille présentant une surface complexe, qui est de nature à permettre l'ensemble des opérations habituelles dans un laboratoire de prescription - notamment le calcul d'une surface de prescription. La modélisation de l'invention évite de devoir connaître toutes les caractéristiques de la surface complexe de la lentille.

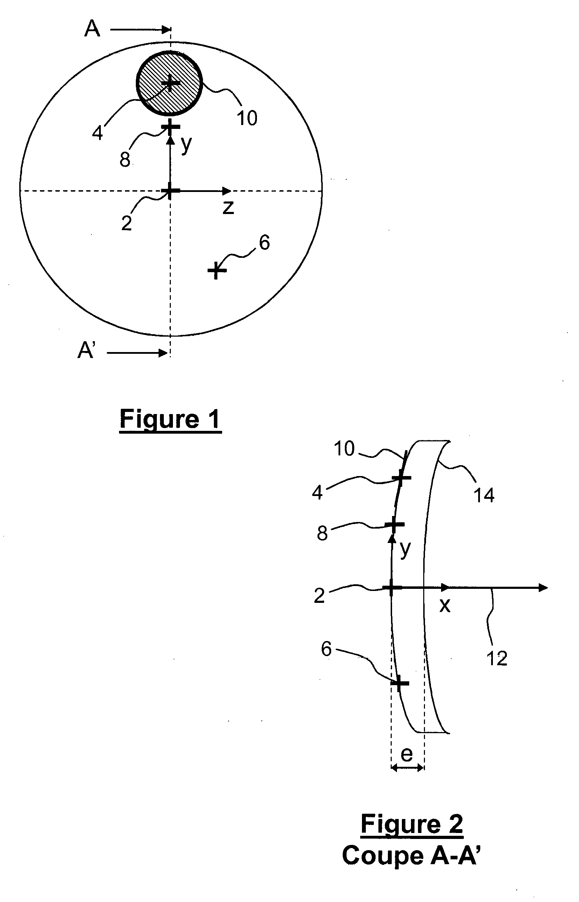

La figure 1 montre une vue de la surface complexe d'une lentille. On a représenté une lentille semifinie d'une forme circulaire, qui présente typiquement un diamètre de 60 mm. Un point de la lentille est utilisé par le laboratoire de prescription pour la référence de prisme; il s'agit généralement du centre de la lentille, référence 2 sur la figure. Le point de référence prisme est habituellement matérialisé sur la lentille par une marque visible. Le point de référence prisme est utilisé par le laboratoire de prescription pour adapter la lentille au prisme prescrit au porteur par l'ophtalmologiste.

La lentille présente aussi un point utilisé pour le calcul ou la mesure des caractéristiques prescrites au porteur : il peut s'agir d'une puissance, en l'absence de prescription d'astigmatisme au porteur. Il peut aussi s'agir d'une puissance, d'un cylindre et d'un axe, si le porteur est affecté d'un astigmatisme qui doit être corrigé. Une telle prescription revient à fournir deux puissances et un axe. Dans la suite, on utilise les mots "point de prescription" pour désigner ce point de la lentille.

Dans le cas d'une lentille progressive, on utilise généralement le point de référence pour la vision de loin comme point de prescription. On considère alors la prescription de l'ophtalmologiste en vision de loin. On peut aussi utiliser dans le cas d'une lentille progressive le point de référence pour la vision de près 6 comme point de prescription : dans ce cas, la prescription est celle proposée par l'ophtalmologiste en vision de près. Pour une lentille dédiée à la vision de près, on utilise le point de référence pour la vision de près comme point de prescription. On a représenté sur la figure le cas d'une lentille multifocale progressive, avec le point 4 de référence pour la vision de loin; comme dans les lentilles commercialisées par la demanderesse, ce point est 8 mm au-dessus du centre de la lentille.

On appelle dans la suite "points caractéristiques" de la lentille le point de référence prisme (ou PRP) et le point de prescription - qu'il s'agisse du point de référence pour la vision de loin ou du point de référence pour la vision de près, ou encore d'un autre point de la lentille.

La lentille présente aussi classiquement une croix de montage 8. Il s'agit d'un point qui est matérialisé sur la surface de la lentille et qui est utilisé par l'opticien pour le montage de la lentille dans la monture. Dans les lentilles de la demanderesse, ce point est situé quatre millimètres au-dessus du PRP. Ce point n'est pas un "point caractéristique" au sens de la présente description mais il est utile au positionnement de la lentille devant l'oeil du porteur.

L'invention propose de fournir, pour modéliser une surface complexe d'une lentille, les éléments suivants :

- le point de référence prisme et le point de prescription;
- la normale à la surface complexe au point de référence prisme et
- les caractéristiques locales de la surface complexe au point de prescription.

Ces différents éléments peuvent être fournis sous différentes formes : il suffit qu'il soit possible de positionner la surface complexe, i. e.

- de placer en un point donné le point de référence prisme, avec la normale dans une direction donnée et
- de connaître alors la position du point de prescription et
- les caractéristiques locales de la surface complexe au point de prescription ou autour de celui-ci.

Il est ainsi possible, comme expliqué plus bas, de calculer une surface de prescription ou de calculer la puissance de la lentille au point de prescription dans différentes configurations.

Les éléments formant la modélisation peuvent être exprimés dans un repère orthonormé dont l'origine est le point de référence prisme, dont l'axe x a la même direction que la normale à la surface complexe en ce point et dont l'axe z est donné par la tangente à la surface complexe au point de référence prisme contenue dans un plan horizontal dans la position d'utilisation de la lentille, l'axe y est alors l'axe orthogonal aux deux précédents. La figure montre dans ce cas les axes x et y. Le repère pourrait aussi être défini en indiquant que les axes y et z sont tangents à la surface complexe au point de référence prisme et correspondent à l'orientation de la lentille lors de son utilisation. Ainsi, dans les lentilles progressives de la demanderesse, la verticale est définie par le centre de la lentille (qui est aussi le point de référence prisme) et par la croix de montage, qui sont tous deux matérialisés sur la lentille. On pourrait dans ce cas définir le repère en indiquant simplement que le plan (y, z) est tangent à la lentille au point de référence prisme et que le plan (x, y) contient la croix de montage.

Dans tous les cas, la fourniture du point de référence prisme, du point de prescription et de la normale à la surface complexe au point de référence prisme permettent de positionner la surface complexe de la lentille et de diriger un rayon vers le point de prescription.

Les caractéristiques locales de la surface sont fournies au point de prescription ou autour de celui-ci. On peut utiliser pour fournir ces caractéristiques le repère mentionné plus haut, centré sur le point de référence prisme, ou un repère centré sur le point de prescription. Si l'on utilise un deuxième repère, centré sur le point de prescription, on peut assurer que le plan tangent au point de prescription est le plan (y, z) de ce deuxième repère; il est toutefois nécessaire de connaître les directions des axes du deuxième repère dans le premier repère, de sorte à pouvoir procéder librement à un changement de repère.

Si l'on fournit les caractéristiques locales de la surface au point de prescription, il peut s'agir des dérivées premières et secondes de la surface au point de prescription - ce qui représente cinq coefficients.

Les caractéristiques locales autour du point de prescription peuvent être fournies dans une pastille 10 de forme circulaire, dont le centre est le point de prescription et qui s'étend sur la surface complexe autour du point de prescription; le diamètre de la pastille est supérieur ou égal à deux millimètres, de sorte à fournir les caractéristiques de la surface au moins au voisinage immédiat du point de prescription. Le diamètre de la pastille est inférieur ou égal à 12 mm - cette taille étant suffisante pour une modélisation de la surface complexe et limitant la quantité d'information nécessaire pour modéliser la surface. On pourrait aussi, en alternative à ce diamètre de 12 mm, limiter la taille de la pastille de sorte qu'elle ne recouvre pas deux points caractéristiques de la lentille : dans ce cas, la pastille s'étend autour du point de prescription - point VL ou point VP - et ne comprend pas le point de référence de prisme.

A l'intérieur de cette pastille, les caractéristiques locales de la surface complexe peuvent être fournies dans l'un ou l'autre des repères mentionnés plus haut sous différentes formes. On peut ainsi fournir une carte d'altitude des différents points de la surface complexe; on peut aussi fournir une représentation de la surface complexe par décomposition polynomiale, par exemple à l'aide de familles de polynômes disponibles dans les logiciels de calcul de surface du commerce. Par exemple, dans le cas de polynômes de Zemike (ou d'autres polynômes), on peut utiliser une décomposition à l'ordre 3, pour un diamètre de pastille de 2 mm ou jusqu'à l'ordre 5 pour un diamètre de pastille de 10 mm ou plus. Le choix d'un ordre minimal de 3 résulte du fait qu'une décomposition au deuxième ordre n'apporte pas plus d'information qu'une représentation de la surface au point de prescription par la simple donnée de ses dérivées premières et secondes. La précision de la modélisation augmente avec l'ordre des polynômes; il s'avère d'après les tests de la demanderesse qu'une valeur supérieure à 5 n'augmente pas manifestement la précision avec laquelle une surface de prescription peut être calculée, pour la plage de diamètres considérés.

Des tests effectués par la demanderesse préconisent l'utilisation de polynômes de Zemike allant jusqu'à un degré 5 pour un diamètre de pupille allant de 8mm à 12mm, un degré 4 pour un diamètre allant de 3mm à 7mm et un degré 3 pour un diamètre strictement inférieur à 3mm.

La modélisation de surface complexe décrite ci-dessus peut aussi servir pour la modélisation « locale » d'une lentille. Dans ce cas, la modélisation est utilisée pour la surface complexe de la lentille. Si l'autre surface de la lentille est une surface torique ou sphérique, il suffit de fournir en plus de la modélisation de la surface complexe, les indications suivantes pour disposer d'une modélisation de l'ensemble de la lentille

- - l'épaisseur de la lentille au PRP;
- - le plan tangent de l'autre surface de la lentille; et
- - la ou les courbures principales de l'autre surface de la lentille et leurs orientations.
- - l'indice du matériau composant la lentille

L'épaisseur de la lentille est mesurée suivant un axe donné en un point donné; il s'agit en général du point de référence prisme et de la normale à la surface avant en ce point.

Le plan tangent de l'autre surface de la lentille est donné, par exemple à l'intersection de la lentille avec l'axe le long duquel l'épaisseur est mesurée. On peut donner le plan tangent par la simple fourniture du vecteur unitaire normal à l'autre surface de la lentille au point d'intersection avec l'axe.

Les courbures et leurs orientations de l'autre surface de la lentille peuvent être données directement ou indirectement par la donnée d'une prescription dans une configuration donnée. Dans ce dernier cas les courbures et leurs orientations sont calculées afin de satisfaire la prescription donnée.

La figure 2 montre une vue en coupe d'une lentille complexe, dans un plan vertical. On a porté sur la figure le point de référence prisme, le point de prescription et la pastille de la surface complexe, référencés comme sur la figure 1. La surface complexe a une normale au point de référence prisme confondue avec l'axe x de la lentille. L'épaisseur e est mesurée suivant l'axe x; on a encore porté le vecteur normal 12 définissant le plan tangent à la surface de prescription sur l'axe x.

La modélisation de lentille ainsi proposée est utilisable notamment pour le calcul de prescription, comme indiqué plus bas.

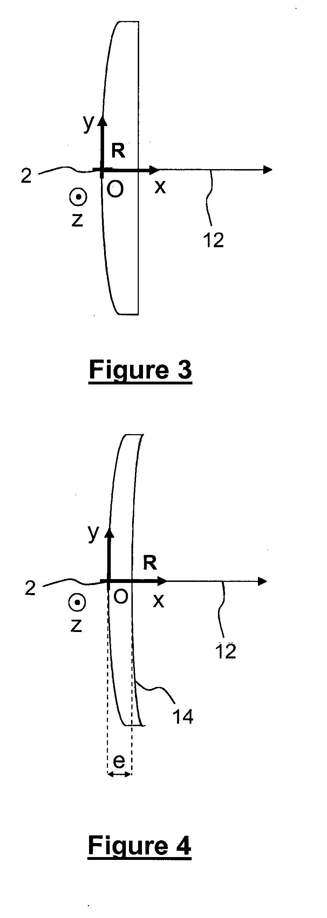

On décrit en référence aux figures 3 à 7 les étapes d'un procédé de calcul de la surface de prescription d'une lentille complexe de telle sorte que la puissance prescrite soit obtenue dans les conditions du porté. On part d'une lentille semi-finie, qui présente une surface complexe, modélisée comme indiqué plus haut.

La première étape consiste à associer à la face complexe de cette lentille semi-finie un repère R, dont l'origine se situe au point de référence prisme et dont l'axe x est normal à la face complexe en ce point. Les axes y et z passent par le PRP et sont dans le plan tangent à la surface complexe en ce point. L'axe y passe par le PRP et par le point qui est la projection orthogonale suivant l'axe x de la croix de montage sur le plan tangent à la surface complexe au PRP. L'axe z est orthogonal aux deux autres et dont le sens est choisi afin d'obtenir un repère direct. La figure 3 montre ce repère et une coupe de la face complexe dans le plan (PRP,x,y).

La deuxième étape du calcul représentée sur la figure 4 consiste à positionner le centre de la surface de prescription de départ 14 sur l'axe x, à une distance du PRP égale à l'épaisseur e voulue du verre. Cette étape nécessite de connaître une surface de prescription de départ et une épaisseur de la lentille. La surface de prescription approchée peut être obtenue par exemple en soustrayant de la prescription de puissance pour le porteur, fournie par l'ophtalmologiste, la sphère moyenne au point de prescription de la surface complexe; ceci correspond à un choix d'une surface de prescription sphérique. Si la prescription du porteur comprend un cylindre, avec un axe donné, on peut choisir une surface de prescription de départ qui présente :

- une sphère égale à la différence entre la prescription de sphère fournie par l'ophtalmologiste à laquelle on aura rajouté la moitié du cylindre prescrit, et la sphère moyenne au point de prescription de la surface complexe; et
- un cylindre et un axe égaux au cylindre et à l'axe prescrits par l'ophtalmologiste.

L'épaisseur de la lentille peut être choisie en fonction de la puissance prescrite au porteur, ou encore en fonction des contraintes de montage dans la monture. L'épaisseur, comme le montre la suite de la description, ne varie plus dans le procédé proposé : elle peut donc être égale à l'épaisseur suivant l'axe de la lentille adaptée.

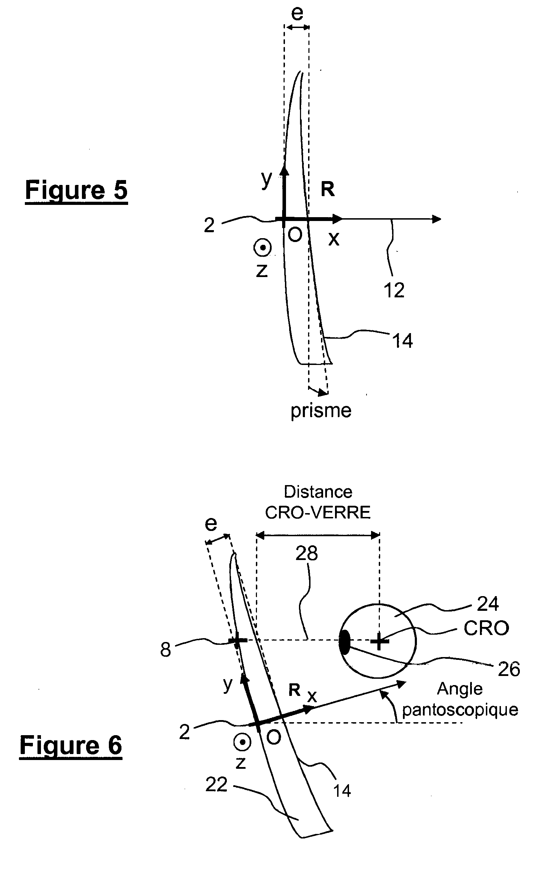

La figure 5 montre une troisième étape du procédé. A cette étape, on tourne la surface de prescription de départ, pour obtenir le prisme souhaité, tout en maintenant fixe l'épaisseur au centre. Dans l'exemple de la figure, il s'agit d'une rotation autour de l'axe z, dans le sens direct. Plus généralement, l'inclinaison est fournie par le prisme prescrit au porteur par l'ophtalmologiste; l'inclinaison de la surface de prescription est donc choisie de sorte que l'angle du plan tangent au niveau de l'axe x procure le prisme prescrit. On comprend à cette étape pourquoi le point de référence prisme de la surface complexe est appelé ainsi.

La figure 6 montre la quatrième étape du procédé qui consiste à positionner la lentille constituée de la face avant complexe et de la face de prescription de départ (avec une épaisseur e et le prisme prescrit) dans la configuration de prescription dite configuration porteur.

Dans cette configuration on doit positionner la lentille initiale devant l'oeil du porteur pour lequel est destinée la lentille. D'autres configurations seront décrites par la suite.

Apparaît sur la figure la lentille initiale 22, l'oeil du porteur 24, la représentation schématique de la pupille 26, le centre de rotation de l'oeil, noté CRO, ainsi que l'axe horizontal 28 passant par le centre de rotation de l'oeil.

Cette lentille initiale est placée devant l'oeil de façon à occuper la position qu'elle aurait si elle était réellement montée dans la monture du porteur. Pour ce faire, elle est translatée suivant l'axe y de telle sorte que la croix de montage soit en face du CRO , puis tournée autour de l'axe passant par la croix de montage et de direction z d'un angle égal à l'angle pantoscopique de la monture. On pourra procéder de même suivant l'axe y pour tenir compte du galbe éventuel de la monture. Enfin la lentille est translatée suivant l'axe 28 de telle sorte que la distance entre le CRO et la face de prescription soit celle qui existera entre le CRO du porteur et le verre final une fois monté dans sa monture et posé devant l'oeil.

Ces paramètres de montage de la lentille sont soit fournis par le fabriquant soit estimés, pour un porteur moyen d'une population donnée, comme cela est connu de l'homme du métier.

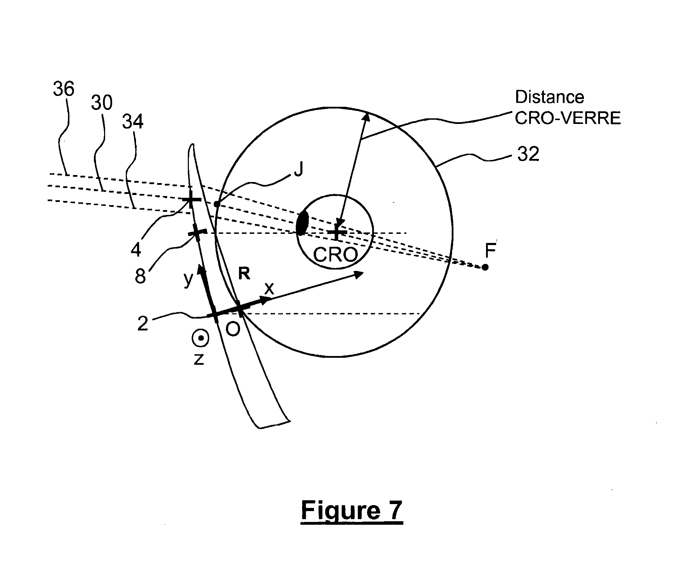

La figure 7 montre une cinquième étape du procédé. A cette étape, on calcule, par tracé de rayon, en passant par le point de prescription de la surface complexe, la ou les puissances porteur obtenues avec la surface de prescription considérée. Ce calcul permet de déterminer si la surface de prescription considérée fournit ou non les puissances prescrites. Il est ensuite possible de modifier, si nécessaire, la surface de prescription, comme indiqué plus bas. Le tracé de rayon peut s'effectuer simplement : on connaît par la modélisation la surface complexe et notamment les caractéristiques locales de la surface de prescription au point de prescription ou autour de celui-ci. A cette étape, le tracé de rayon suppose aussi connu l'indice du matériau formant la lentille. La connaissance des caractéristiques géométriques de la surface de prescription et de la position de la surface de prescription permettent de poursuivre le tracé de rayon à travers la lentille.

Dans la configuration de la figure 7, on peut calculer les points de focalisation $F_1$ et $F_2$ d'une pluralité de rayons parallèles au rayon 30, et voisins de ce dernier. La figure montre à titre d'exemple deux rayons 34 et 36.

Les puissances porteur calculées lors de cette cinquième étape - mais cela reste vrai dans toutes les autres configurations, sont égales à l'inverse d'une distance de focalisation. Ces distances nécessitent de définir une référence. Dans la configuration porteur cette référence est la sphère dite sphère des sommets référencée 32 sur la figure. Elle a pour centre le CRO et passe par le point d'intersection de l'axe horizontal 28 et de la surface arrière de la lentille. Ainsi la proximité d'un des points de focalisation est définie comme l'inverse 1/JF de la distance JF entre le point J d'intersection du rayon 30 avec la sphère des sommets et le point F de focalisation des rayons 30 et de ses voisins considérés. Dans cette configuration, la puissance est définie comme la proximité 1/JF. Le même raisonnement dans un plan perpendiculaire nous permet de trouver l'autre point de focalisation et de définir deux focales d'astigmatisme et leurs orientation comme il est décrit dans «Ray-tracing through progressive ophtalmic lenses » de B. Bourdoncle, J.P. Chauveau, J.L. Mercier dans SPIE Vol. 1354 International Lens Design Conference (1990). On pourrait aussi considérer la proximité relativement au centre de rotation de l'oeil et non plus relativement au point J.

En termes de front d'onde, il est tout aussi possible de calculer, pour un front d'onde incident plan - i. e. pour des rayons parallèles - l'allure du front d'onde après traversée de la lentille. Le front d'onde après traversée de la lentille présente alors des valeurs de courbures - courbures principales et angles, ou sphère, cylindre et axe - qui doivent permettre d'atteindre les valeurs prescrites par l'ophtalmologiste.

Le tracé de rayons passant par des points voisins du point de prescription ne nécessite pas de connaître l'ensemble de la surface complexe : il suffît de connaître les caractéristiques locales de la surface, au point de prescription - dans le cas d'un seul rayon - ou autour de celui-ci - dans le cas d'une pluralité de rayons autour d'un rayon passant par le point de prescription. Le calcul de puissance est ainsi possible sans qu'il ne soit nécessaire de disposer d'informations sur l'ensemble de la surface complexe.

La surface arrière est calculée dans cette étape par un procédé d'optimisation ou de recherche de zéro d'une fonction; la nature de l'optimisation ou celle de la recherche de zéro d'une fonction n'est pas détaillée, dans la mesure où il est possible d'utiliser diverses solutions connues de l'homme du métier, comme les méthodes de Levenberg-Marquardt et de Quasi-Newton pour l'optimisation ou les méthodes de Newton et de Newton-Raphson pour la recherche du zéro d'une fonction. Dans le principe, l'optimisation consiste à fixer des valeurs cibles - les valeurs de prescription fournies par l'ophtalmologiste - et à faire varier les courbures de la surface de prescription pour que les valeurs obtenues lors du calcul par tracé de rayons s'approchent des valeurs cibles. On peut aussi considérer que les valeurs des puissances obtenues par le tracé de rayons sont une fonction à valeurs réelles de variables qui sont les courbures de la surface de prescription; dans ce cas, la recherche d'une surface de prescription revient à rechercher les valeurs des courbures pour lesquelles la fonction a pour valeurs les valeurs prescrites par l'ophtalmologiste. Le problème mathématique est la recherche des zéros d'une fonction à valeurs réelles de plusieurs variables réelles. Ce problème peut être résolu par l'application de méthodes mathématiques connues.

Par exemple, l'utilisation d'une méthode de Newton afin d'assurer une prescription porteur, avec une précision de 0.001 dioptries sur les puissances, nécessite de 2 à 4 itérations pour une gamme de sphères de prescription allant de -2 à +2 dioptries et une gamme de cylindre de prescription allant de -2 à +2 dioptries.

A la sortie de cette cinquième étape, l'invention fournit l'ensemble des informations nécessaires à l'usinage de la surface de prescription : l'épaisseur au centre de la lentille est fixée à la deuxième étape, l'inclinaison de la surface de prescription est fixée à la troisième étape, le positionnement de la lentille devant l'oeil est fournie à la quatrième étape, et les courbures de la surface de prescription sont calculés à la cinquième étape. Il est donc possible de procéder à l'usinage de la surface de prescription. Comme expliqué plus haut, ce calcul de la surface arrière a été effectué sans connaître l'ensemble de la surface complexe, mais à partir de caractéristiques géométriques locales de la surface complexe, au point de prescription ou autour de ce point.

Une autre configuration possible pour le calcul de la puissance est la configuration dite configuration frontofocomètre; cette configuration correspond à une évaluation de la puissance dans les conditions de mesure à l'aide d'un frontofocomètre. Un frontofocomètre est un appareil, bien connu en soi; l'appareil présente un embout, sur lequel on dispose la lentille pour la mesure. L'appareil fournit des indications de la puissance, de l'astigmatisme et de l'axe.

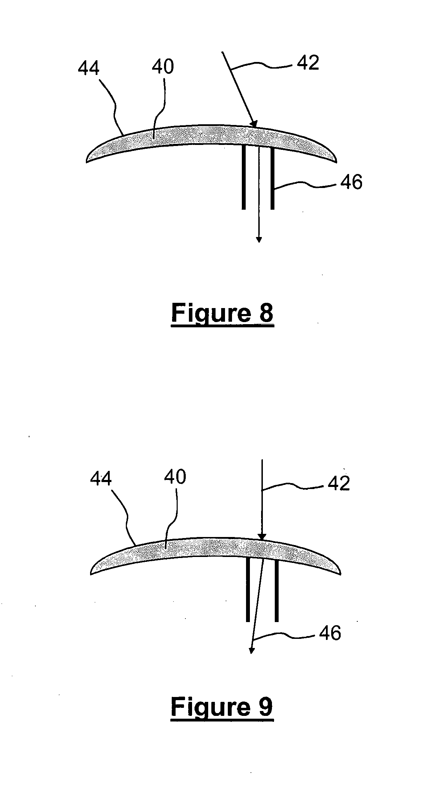

Les figures 8 et 9 montrent des représentations schématiques d'une lentille et de l'embout d'un frontofocomètre, pour la mesure d'une puissance dans diverses configurations frontofocomètre. La figure 8 montre la lentille 40, un rayon 42 entrant par le point à mesurer sur la surface avant 44 de la lentille, l'embout 46 du frontofocomètre, ainsi que le rayon après traversée de la lentille. Dans la configuration de la figure 8, traditionnellement appelée configuration FAO ("focus on axis", focalisation sur l'axe), le rayon moyen du faisceau sortant de l'embout est perpendiculaire à la surface en contact avec l'embout - dans l'exemple la surface arrière. La figure 9 est analogue à la figure 8; toutefois, dans la configuration de la figure 9, traditionnellement appelée configuration IOA ("infinity on axis", infini sur l'axe), le rayon moyen 42 rentre dans la surface de la lentille opposée à l'embout en étant parallèle à l'axe de l'embout, i.e. perpendiculaire à la surface en contact avec l'embout. On n'a pas représenté aux figures d'autres rayons, ni le point de focalisation.

L'invention peut être utilisée pour déterminer une surface de prescription d'une lentille, de sorte que les résultats de la mesure des puissances, dans une des configurations mentionnées, soient égaux aux prescriptions de l'ophtalmologiste.

En première approximation, la puissance représente la proximité du point de focalisation, après traversée du verre, d'un faisceau de rayons provenant de l'infini; cette définition de la puissance présente l'avantage de correspondre à la définition de la puissance pour une approximation lentille mince au centre optique. Mais dans la mesure où les rayons en cause peuvent traverser le verre en incidence oblique dans une zone du verre sans axe de symétrie, où le prisme local est non nul et donc en présence d'aberrations optiques, on peut être amené à considérer différentes configurations pour atteindre de façon exacte la puissance prescrite.

Dans la pratique, les opticiens utilisent souvent pour la mesure de puissances un frontofocomètre. Il est possible de déterminer la surface de prescription de telle sorte que la mesure au frontofocomètre fournisse les valeurs de puissances prescrites par l'ophtalmologiste.

Il est toutefois plus avantageux que les valeurs prescrites par l'ophtalmologiste soient les valeurs obtenues dans la configuration de la figure 7 : en effet, ceci correspond mieux à la perception du porteur des lentilles. Dans ce cas, les valeurs mesurées à l'aide d'un frontofocomètre peuvent être légèrement différentes des valeurs prescrites par l'ophtalmologiste. Le tracé de rayons permet néanmoins, une fois la surface de prescription déterminée, de calculer quels seront les résultats obtenus dans une mesure au frontofocomètre pour une telle surface. Fournir ces valeurs à l'opticien lui permet de vérifier, par une mesure au frontofocomètre, l'usinage de la surface de prescription de la lentille

Bien entendu, la présente invention n'est pas limitée aux modes de réalisations décrits à titre d'exemple. Dans la description qui précède, on a considéré le cas de lentilles présentant une surface avant complexe et une surface arrière de prescription; autrement dit, au porté, la surface de prescription est la surface la plus proche de l'oeil du porteur. L'invention s'applique aussi au cas d'une surface de prescription sur l'avant de la lentille, qui n'est pas décrit en détail dans les exemples.

On peut utiliser d'autres repères que ceux mentionnés dans les modes de réalisation préférés ou d'autres configurations que celles des figures 7 à 9 pour la mesure de la puissance.

## Revendications

1. Un procédé pour modéliser une surface complexe de lentille ophtalmique, comprenant

   - la fourniture de :

       - un point de référence prisme (2) et un point de prescription (4);
       - la normale (12) à la surface complexe au point de référence prisme ; et
       - des caractéristiques locales de la surface complexe au point de prescription ou autour du point de prescription, lesdites caractéristiques locales comprenant la normale et les courbures principales avec leurs orientations en ce point dans un repère donné ; et

   - la modélisation de la surface complexe de la lentille par lesdites caractéristiques locales.

2. Le procédé de la revendication 1, **caractérisée en ce que** les caractéristiques locales autour du point de prescription comprennent des caractéristiques locales dans une pastille (10) centrée sur le point de prescription et de diamètre supérieur ou égal à 2 mm.

3. Le procédé de la revendication 1 ou 2, **caractérisée en ce que** les caractéristiques locales autour du point de prescription comprennent des caractéristiques locales dans une pastille (10) centrée sur le point de prescription et de diamètre inférieur ou égal à 12 mm.

4. Le procédé de la revendication 1 ou 2, **caractérisée en ce que** les caractéristiques locales autour du point de prescription comprennent des caractéristiques locales dans une pastille (10) centrée sur le point de prescription et ne recouvrant pas le point de référence prisme.

5. Un procédé pour modéliser une lentille présentant une première surface et une deuxième surface sphérique ou torique, comprenant la fourniture de :

   - une modélisation de la première surface de la lentille par le procédé de l'une des revendications 1 à 4;
   - l'épaisseur de la lentille au point de référence prisme (2) suivant l'axe défini par ladite normale;
   - le plan tangent à la deuxième surface (14) de la lentille sur l'axe;
   - les courbures principales et leurs orientations de la deuxième surface ; et
   - l'indice du matériau composant la lentille.

6. Un procédé de calcul de la surface de prescription d'une lentille semi-finie présentant une surface complexe, comprenant :

   - la fourniture d'une prescription comprenant au moins une puissance et un prisme ;
   - la fourniture d'une modélisation de la lentille par le procédé de la revendication 5;
   - le calcul de la surface de prescription (14) sphérique ou torique en utilisant un tracé de rayon passant par le point de prescription ou autour du point de prescription.

7. Le procédé de la revendication 6, **caractérisé en ce que** l'étape de calcul comprend :

   - la fourniture d'une surface de prescription de départ présentant sur l'axe défini par la normale, le prisme prescrit;
   - la variation des courbures et leurs orientations de la surface de prescription de départ, à prisme constant, pour que les puissances calculées par le tracé de rayon s'approchent des puissances prescrites.

## Patentansprüche

1. Verfahren zur Modellierung einer komplexen Fläche einer ophthalmischen Linse, umfassend

   - die Bereitstellung von:

       - einem Prismenbezugspunkt (2) und einem Rezeptpunkt (4);
- der Normalen (12) zur komplexen Fläche am Prismenbezugspunkt; und
- lokaler Merkmale der komplexen Fläche am Rezeptpunkt oder um den Rezeptpunkt herum, wobei die lokalen Merkmale die Normale und die Hauptkrümmungen mit ihren Ausrichtungen an diesem Punkt in einem gegebenen Bezugssystem enthalten; und

- die Modellierung der komplexen Fläche der Linse durch die lokalen Merkmale.

2. Verfahren nach Anspruch 1, **dadurch gekennzeichnet, dass** die lokalen Merkmale um den Rezeptpunkt herum lokale Merkmale in einem Plättchen (10) enthalten, das auf den Rezeptpunkt zentriert ist und einen Durchmesser von mehr als oder gleich 2 mm hat.

3. Verfahren nach Anspruch 1 oder 2, **dadurch gekennzeichnet, dass** die lokalen Merkmale um den Rezeptpunkt herum lokale Merkmale in einem Plättchen (10) enthalten, das auf den Rezeptpunkt zentriert ist und einen Durchmesser von weniger als oder gleich 12 mm hat.

4. Verfahren nach Anspruch 1 oder 2, **dadurch gekennzeichnet, dass** die lokalen Merkmale um den Rezeptpunkt herum lokale Merkmale in einem Plättchen (10) enthalten, das auf den Rezeptpunkt zentriert ist und den Prismenbezugspunkt nicht abdeckt.

5. Verfahren zum Modellieren einer eine erste und eine zweite sphärische oder torische Fläche aufweisenden Linse, umfassend die Bereitstellung:

- einer Modellierung der ersten Fläche der Linse durch das Verfahren nach einem der Ansprüche 1 bis 4;
- der Dicke der Linse am Prismenbezugspunkt (2) gemäß der von der Normalen definierten Achse;
- der die zweite Fläche (14) der Linse auf der Achse tangierenden Ebene;
- der Hauptkrümmungen und ihrer Ausrichtungen der zweiten Fläche; und
- des Index des die Linse bildenden Materials.

6. Verfahren zur Berechnung der Rezeptfläche einer halbfertigen Linse, die eine komplexe Fläche aufweist, umfassend:

- die Bereitstellung eines Rezepts, das mindestens eine Stärke und ein Prisma enthält;
- die Bereitstellung einer Modellierung der Linse durch das Verfahren des Anspruchs 5;
- die Berechnung der sphärischen oder torischen Rezeptfläche (14) unter Verwendung eines Radiusverlaufs, der durch den Rezeptpunkt oder um den Rezeptpunkt herum geht.

7. Verfahren nach Anspruch 6, **dadurch gekennzeichnet, dass** der Rechenschritt Folgendes umfasst:

- die Bereitstellung einer Ausgangs-Rezeptfläche, die auf der von der Normalen definierten Achse das verschriebene Prisma aufweist;
- die Veränderung der Krümmungen und ihrer Ausrichtungen der Ausgangs-Rezeptfläche, mit konstantem Prisma, damit die durch den Radiusverlauf berechneten Stärken sich den verschriebenen Stärken annähern.


**Claims**

1. Method for modelling a complex ophthalmic lens surface, comprising

- supplying:

- a prism reference point (2) and a prescription point (4);
- the normal (12) to the complex surface at the prism reference point; and
- local properties of the complex surface at the prescription point or around the prescription point, said local properties comprising the normal and the principal curvatures with their orientations at this point in a given coordinates system; and

- modelling the complex surface of the lens by said local properties.

2. Method of Claim 1, **characterized in that** the local properties around the prescription point comprise the local properties in a dot (10) centred on the prescription point and of diameter larger than or equal to 2 mm.

3. Method of either of Claims 1 and 2, **characterized in that** the local properties around the prescription point comprise local properties in a dot (10) centred on the prescription point and of diameter smaller than or equal to 12 mm.

4. Method of either of Claims 1 and 2, **characterized in that** the local properties around the prescription point comprise local properties in a dot (10) centred on the prescription point and not covering the prism reference point.

5. Method for modelling a lens having a first surface and a spherical or toroidal second surface, comprising supplying:

    - a model of the first surface of the lens, produced using the method of one of Claims 1 to 4;
    - the thickness of the lens at the prism reference point (2) along the axis defined by said normal;
    - the plane tangent to the second surface (14) of the lens on the axis;
    - the principal curvatures of the second surface and their orientations; and
    - the index of the material from which the lens is made.

6. Method for calculating the prescription surface of a semi-finished lens having a complex surface, comprising:

    - supplying a prescription comprising at least one power and one prism;
    - supplying a model of the lens, produced using the method of Claim 5;
    - calculating the spherical or toroidal prescription surface (14) using ray tracing through the prescription point or around the prescription point.

7. Method of Claim 6, **characterized in that** the calculating step comprises:

    - supplying a starting prescription surface having, on the axis defined by the normal, the prescribed prism;
    - varying the curvatures of the starting prescription surface and their orientations at constant prism so that the powers calculated by the ray tracing tend toward prescribed powers.

**Figure 1**

**Figure 2**
**Coupe A-A'**

**Figure 3**

**Figure 4**

**Figure 5**

prisme

Distance CRO-VERRE

**Figure 6**

Angle pantoscopique

**Figure 7**

44    40          42

46

**Figure 8**

44    40          42

46

**Figure 9**

# EP 1 376 202 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 2699294 A
- US 5270745 A
- US 5272495 A
- FR 2683642 A
- FR 2704327 A
- FR 2588973 A
- EP 0990939 A
- US 5444503 A
- US 6089713 A
- EP 0857993 A
- US 2878721 A

### Littérature non-brevet citée dans la description

- Ray-tracing through progressive ophtalmic lenses. **B. BOURDONCLE ; J.P. CHAUVEAU ; J.L. MERCIER.** SPIE. International Lens Design Conference, 1990, vol. 1354